# EUROPEAN PATENT SPECIFICATION

(11) **EP 3 850 814 B1**
(45) Date of publication and mention of the grant of the patent: **30.08.2023**
(21) Application number: 19872406.4
(22) Date of filing: 16.10.2019
(51) Int. Cl.: H04L 45/00, H04L 45/50, H04L 45/64, H04L 69/22, H04L 12/46

(54) **METHOD AND SYSTEM FOR NETWORK ROUTING**
VERFAHREN UND SYSTEM FÜR NETZWERKLEITWEGLENKUNG
PROCÉDÉ ET SYSTÈME DESTINÉS À UN ROUTAGE DE RÉSEAU

(30) Priority: 19.10.2018 US 201862748130 P; 11.09.2019 US 201916567455
(43) Date of publication of application: 21.07.2021
(73) Proprietor: HUAWEI TECHNOLOGIES CO., LTD., Shenzhen, Guangdong 518129 (CN)
(72) Inventor: AKHAVAIN MOHAMMADI, Mehdi Arashmid, Ottawa, Ontario K2H 8B3 (CA)
(74) Representative: MERH-IP Matias Erny Reichl Hoffmann Patentanwälte PartG mbB
(86) International application number: PCT/CN2019/111439
(87) International publication number: WO 2020/078373

(56) References cited:
- WO-A1-2015/198303
- WO-A1-2017/063717
- US-A1- 2015 256 456
- US-A1- 2019 288 873
- MATSUSHIMA SOFTBANK C FILSFILS M KOHNO P CAMARILLO CISCO SYSTEMS S ET AL: "Segment Routing IPv6 for Mobile User Plane; draft-ietf-dmm-srv6-mobile-uplane-02.txt", SEGMENT ROUTING IPV6 FOR MOBILE USER PLANE; DRAFT-IETF-DMM-SRV6-MOBILE-UPLANE-02.TXT; INTERNET-DRAFT: DMM WORKING GROUP, INTERNET ENGINEERING TASK FORCE, IETF; STANDARDWORKINGDRAFT, INTERNET SOCIETY (ISOC) 4, RUE DES FALAISES CH- 1205 GENEVA, SWITZER, no. 2, 2 July 2018 (2018-07-02), pages 1-26, XP015127425, [retrieved on 2018-07-02]
- 3GPP: "3rd Generation Partnership Project; Technical Specification Group Core Network and Terminals; Study on User Plane Protocol in 5GC. (Release 16)", 3GPP TR 29.892 V0.2.0, 31 August 2018 (2018-08-31), XP051575250,

## Description

### TECHNICAL FIELD

This disclosure relates to the field of wireless communication networks in general, and to the field of wireless core network user plane in particular. The invention is set out in the appended set of claims.

### BACKGROUND

General Packet Radio Service (GPRS) is a packet oriented mobile data standard used in existing wireless networks, including second generation (2G) through fourth generation (4G) networks. The Third Generation Partnership Project (3GPP), sets standards for such networks, including a next (fifth) generation (5G) standard. Such networks are notionally divided into a Control Plane (CP), for controlling the network, and a User Plane (UP) which carries user traffic. The UP is also sometimes referred to as the data plane.

Functions within existing mobile network UPs utilize the GPRS Tunneling Protocol (GTP), which is an Internet Protocol (IP) based protocol that is used to carry UP traffic through a tunnel between nodes or functions within the UP. GTP tunnels are used in 2G through 4G networks to carry user traffic bearer channels. A bearer channel has an associated Quality of Service (QoS). GTP tunnels are unidirectional. Accordingly, uplink and downlink packets within a protocol data unit (PDU) session are transmitted through separate GTP tunnels. Functions within a control plane instruct the network to create GTP tunnels for specific QoS as part of the session establishment procedure. GTP tunnels extend between different nodes or functions within the UP of the mobile core (e.g. between the access nodes and service gateways (SGW) and between SGW and packet gateways (PGW) of a 4G network).

However GTP was developed for networks which were of smaller scale, and less flexible than what is envisioned for 5G and future networks. 5G and future networks are expected to require higher scalability and require more flexibility in terms of connectivity. Accordingly, a more flexible UP protocol would be advantageous. However implementing such a more flexible UP protocol will be difficult without a migration path between GTP and such a new protocol.

Accordingly, there may be a need for a system and method in wireless networks that is not subject to one or more limitations of the prior art.

In addition, MATSUSHIMA SOFTBANK C FILSFILS M KOHNO P CAMARILLO CISCO SYSTEMS SET AL: "Segment Routing 1Pv6 for Mobile User Plane; draft- ietf-dmm-srv6-mobile-uplane-02.txt", no. 2, 2 July 2018 (2018-07-02), pages 1-26, XP015127425 discloses the applicability of SRv6 (Segment Routing IPv6) to user-plane of mobile networks. According to this document, the source routing capability and the network programming nature of SRv6 accomplish mobile user-plane functions in a simple manner. The statelessness and the ability to control the underlying layer would be even more beneficial to the mobile user-plane. It also simplifies the network architecture by eliminating the necessity of tunnels.

This background information is intended to provide information that may be of possible relevance to the present invention. No admission is necessarily intended, nor should be construed, that any of the preceding information constitutes prior art against the present invention.

### SUMMARY

The invention is set out in the appended set of claims. Aspects of the disclosure provide a system and method for allowing segment routing (SR) in the user plane, without requiring changes to the 3GPP control plane (CP) configured to control wireless core network UP functions that are designed for use with GTP. In this specification, a CP is configured to control wireless core network UP functions that are designed for use with GTP if such a CP establishes a packet data unit (PDU) session to use a GTP based user plane. In some embodiments such a CP distributes GTP information as part of the session establishment procedure. Accordingly, aspects of this disclosure provide a migration path which allows for SR in the UP. In other words, embodiments discussed herein allow for the UP to utilize SR without requiring changes to the 3GPP control plane.

According to an embodiment, each mobile user plane function (also called Mobile network data plane function (MNDPF)) in the UP, is equipped both with a GTP processing module, and an SR module. Each GTP processing module receives GTP information for the GTP tunnels associated with a PDU session. In some embodiments the GTP processing module receives the GTP information from a CP control function. In other embodiments, a function within the 3GPP control plane instructs the end points to establish GTP tunnels, and the end points utilize a GTP control plane (GTP-C) to provide the GTP information to the GTP processing module of the intermediate nodes (also called tandem nodes).

Each mobile user plane function is configured to translate between GTP and SR. This includes the tandem nodes. Accordingly, tandem nodes along the path (hereafter tandem UPFs) can convert from SR to GTP and from GTP to SR. Accordingly tandem UPFs are configured to receive from a first node, an incoming SR packet associated with a first GTP tunnel terminating at the tandem node. The tandem node then transmits an outgoing SR packet to the next node in the mobile core network along the user plane, the outgoing SR packet associated with a second GTP tunnel beginning with the tandem node. In some embodiments, the outgoing SR packet is created by the tandem node based on GTP information previously received by the tandem node for the PDU session. Accordingly, in some embodiments, the incoming SR packets are converted to inbound GTP packets. The inbound GTP packets are converted to outbound GTP packets for the next GTP tunnel (which starts with the tandem node). Then the outbound GTP packets are converted to outbound SR packets for outbound transmission. Utilizing such tandem UPFs enables a migration path which allows GTP based 4G and 5G mobile core equipment to use SR for carrying user plane traffic.

Embodiments have been described above in conjunctions with aspects of the present invention upon which they can be implemented. Those skilled in the art will appreciate that embodiments may be implemented in conjunction with the aspect with which they are described, but may also be implemented with other embodiments of that aspect. When embodiments are mutually exclusive, or are otherwise incompatible with each other, it will be apparent to those skilled in the art. Some embodiments may be described in relation to one aspect, but may also be applicable to other aspects, as will be apparent to those of skill in the art.

The foregoing and other objects, features, aspects and advantages of the present invention will become more apparent from the following detailed description, taken in conjunction with the accompanying drawings in which the description is by way of example only.

### BRIEF DESCRIPTION OF DRAWINGS

For a more complete understanding of this disclosure, reference is now made to the following brief description, taken in connection with the accompanying drawings and detailed description, wherein like reference numerals represent like parts.
Figure 1 illustrates the GTP protocol stack for an example network ;
Figure 2 illustrates an example network utilizing GTP tunnels;
Figure 3 illustrates an IPv6 segment routing header;
Figure 4 illustrates the CP signaling sent from the control plane to the network functions of the UP, according to an embodiment;
Figure 5 illustrates a process in which the network functions of the UP bind SIDs to local addresses and TEIDs, according to an embodiment;
Figure 6 illustrates SID distribution, according to an embodiment;
Figure 7 illustrates an example of packet processing for packets to be sent from gNB to UPF-A, according to an embodiment;
Figure 8 illustrates an example of further packet processing for packets to be sent from gNB to UPF-A, according to an embodiment;
Figure 9 illustrates an example of packet processing for packets received from gNB to UPF-A, according to an embodiment;
Figure 10 illustrates a method executed by a tandem node, such as UPF-A **440**, according to an embodiment; and
Figure 11 is a block diagram of an electronic device (ED) that may be used for implementing the devices and methods disclosed herein.

### DESCRIPTION OF EMBODIMENTS

Deployed networks utilize various UP network elements within a core network (CN) or a Public Land Mobility Network (PLMN) to communicate with wireless devices, such as user equipment (UE). These UP network elements include a base station, for example a NodeB, an evolved Node B (eNodeB, or eNB) for 4G networks, or a next generation NodeB (gNodeB or gNB) for 5G networks. The UP network elements for 4G include L2/L3 anchor nodes such as a packet gateway (PGW) and a serving gateway (SGW). The UP network elements for 5G, other than the gNodeB, are referred to as user plane functions (UPFs).

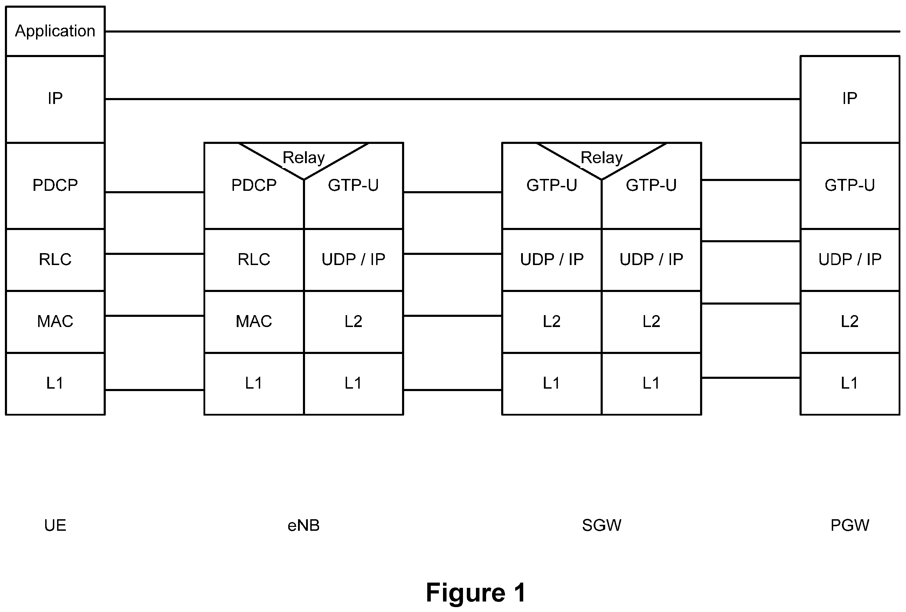

GTP Tunnels are used to carry user data between nodes or functions in the UP of wireless networks. Figure 1 illustrates a protocol stack for an example 4G network including an SGW, PGW and an eNB communicating with a UE. While 4G networks utilize PGWs and SGWs, 3GPP uses the term UPF to refer to the variety of functions performing different tasks on user traffic along the user plane path in proposed 5G networks. For example, UPFs may perform the UP functions previously carried out by the SGW and PGW, but other UPFs may be utilized within future networks.

GTP tunnels are unidirectional. Accordingly, uplink and downlink packets, exchanged between two functions within a single PDU session, are transmitted through separate GTP tunnels. In 4G networks, traffic flows with different QoS requirements (e.g. voice vs data) are carried over different GTP tunnels matching the requested QoS. GTP headers include a Tunnel ID (TEID) field. The TEID is used to stitch together the data path between the above mentioned network nodes for a particular user flow. In other words, TEIDs are used to coordinate traffic hand off between different nodes (such as any one or more of the eNB, the SGW and the PGW).

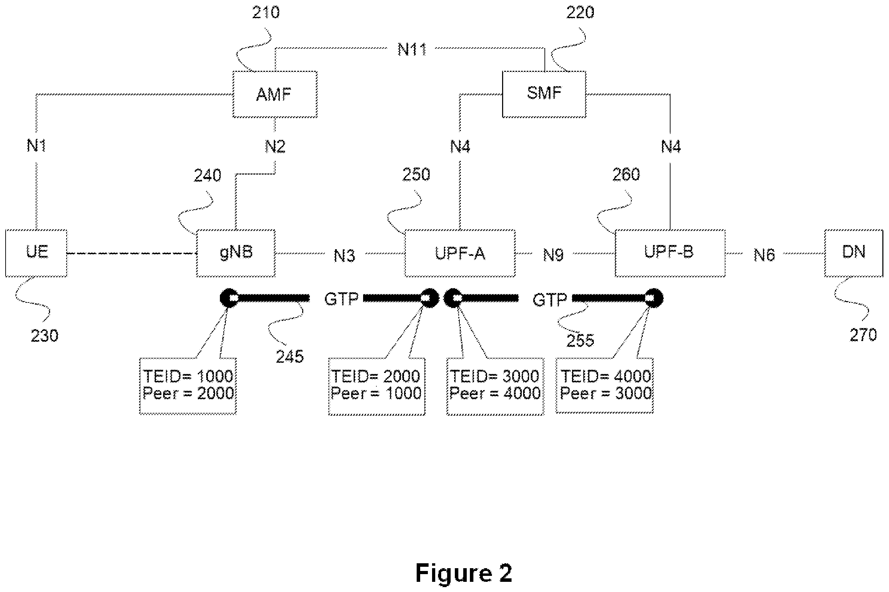

Figure 2 illustrates an example 5G network utilizing GTP tunnels. Figure 2 includes a control plane, which includes control plane functions (CPFs) such as an Access and Mobility Management Function (AMF) **210** and a Session Management Function (SMF) **220**. The SMF **220** is a CP function that is responsible for the allocation and management of IP addresses that are assigned to a UE, as well as the selection of UPFs to be associated with a PDU session. The SMF **220** also provides control signalling to the UPFs associated with the establishment of GTP tunnels. The AMF **210** is responsible for authentication and authorization of access requests, as well as mobility management functions. The AMF **210** may perform other roles and functions as defined by the 3GPP Technical Specification (TS) 23.501. While only two CP functions are illustrated, it should be appreciated that the CP will typically include other CP functions not germane to this disclosure. Figure 2 also illustrates a UP established between UE **230** and Data Network (DN) **270**. The UP includes gNB **240**, UPF-A **250**, and UPF-B **260**. The SMF **220** establishes a Packet Data Unit (PDU) session through the mobile core network between the gNB **240** and the UPF-B **260** for a data session between the UE **230** and DN **270**. Accordingly gNB **240** and the UPF-B **260** are the end points for such PDU session within the core network. AMF **210** communicates with SMF **220** via network interface N11. AMF **210** communicates with UE **230** via network interface N1. AMF **210** communicates with gNB **240** via network interface N2. SMF **220** communicates with UPF-A **250** and UPF-B **260** via network interface N4. One or more control plane functions, for example SMF **220** and AMF **210**, participate in the establishment of GTP tunnels **245**, **255**. In some embodiments, a 3GPP control plane function establishes the GTP tunnels by instructing the endpoints of each tunnel to establish GTP user plane connectivity for the particular user flow. In some such embodiments, the end points gNB **240** and the UPF-B **260** utilize a GTP CP (which in some embodiments is considered separate from the 3GPP CP, while in other embodiments can be considered part of the 3GPP CP) to establish the GTP tunnels for the PDU session.

Accordingly, GTP tunnel **245** is established between gNB **240** and UPF-A **250** over interface N3. As mentioned, GTP uses pairs of unidirectional GTP tunnels between nodes. Thus GTP tunnel **245** represents two unidirectional tunnels. Example GTP tunnels will now be discussed. Accordingly, at gNB **240**, GTP tunnel **245** has TEID= 1000 and Peer (e.g., UPF-A **250**) =2000. At UPF-A **250**, GTP tunnel **245** has TEID= 2000 and Peer (e.g., gNB **240**) =1000, GTP tunnel **255** is established between UPF-A **250** and UPF-B **260** and is used to carry traffic associated with interface N9. GTP tunnel **255** also represents two unidirectional tunnels. Accordingly, at UPF-A **250**, GTP tunnel **255** has TEID= 3000 and Peer (e.g., UPF-B **260**) =4000. At UPF-B **260**, GTP tunnel **255** has TEID= 4000 and Peer (e.g., UPF-A **250**) =3000. It is noted the PDU session is established within the mobile core network to transport traffic flows between the UE **230** and a server in the DN **270**. GTP tunnels are established between the gNB **240** and a user plane function within the core network, for carrying user traffic associated with the PDU session. The user plane function with which the gNB **240** creates the GTP tunnel, may either be the final UPF of the core network, or it may be a tandem function connecting the gNB **240** to either another tandem UPF or to the final UPF of the core network. The final UPF of the core network, in this example, UPF-B **260** acts as a gateway between the core network and the DN **270**. The PDU session as far as the mobile core is concerned ends at UPF-B **260**. At this point all GTP, User Datagram Protocol (UDP) and outer IP headers are removed from the user packet. In some embodiments a network address translation (NAT) is performed and the packet follows regular IP routing and forwarding toward its final destination along the N6 interface towards the DN **270**.

UPF-A **250** is an intermediate node, also called a tandem node, as it is not the end point of the PDU session (at least as far as the core network is concerned). Each tandem node, being an intermediate node along the user plane path in the mobile core network, is associated with two GTP tunnels, and effectively forwards packets from an incoming GTP tunnel to an outgoing GTP tunnel. Before forwarding the packets, some processing may occur.

It is noted while the above example describes SMF **220** as the CP function which controls the establishment of GTP tunnels, in the embodiments described below, another CP function such as software defined networking (SDN) controller (not shown) can be used to control or instruct the establishment of GTP tunnels.

The Internet Engineering Task Force (IETF) has been working on another UP protocol called Segment Routing (SR), in the context of general data networks. Segment Routing (SR), defined in [draft.ietf-spring-segment-routing-15] generalizes the source routing paradigm with an ordered list of global or nodal instructions (segments) prepended in an SR header in order to either steer traffic flows through the network while confining flow states to the ingress nodes in the SR domains or to indicate functions that are performed at specific network locations. In some embodiments, the ordered list both steers traffic and indicates the functions performed by different functions. Embodiments are directed to utilizing SR in mobile core networks, and more specifically to doing so without requiring changes to the 3GPP control plane for the mobile core networks. Embodiments will be discussed with respect to 5G examples, although it should be appreciated that the examples discussed below can be extended to a 4G network or other such networks. For example, the SGW in a 4G network can be suitably configured to act as the tandem node, with an eNB and PGW acting as the PDU session endpoints within the core network.

It is noted that the term user plane refers to a data plane for carrying user traffic from the mobile network point of view. The UP is an overlay on top of a transport layer of an underlying network. Accordingly, the UP described herein includes the UPF's, which communicate via the N3, N9 and N6 interfaces, but it should be appreciated that, for example, layer 2 switches and layer 3 routers form part of the underlying network. Underlying networks can utilize different data plane protocols such as Multiprotocol Label Switching (MPLS) and IPv6. SR has been defined for both of MPLS and IPv6. SR MPLS defines SR for MPLS, whereas, SRv6 is the IPv6 implementation of segment routing. A segment in SR is referred by its Segment Identifier (SID). The SID can be associated with different type of instructions such as a topological instruction, a service instruction, a QoS instruction, etc. A SID can also be associated with a set of one or more functions. The SR architecture supports the association of segments with any type of instruction.

In this disclosure, examples will be discussed for SRv6, but it should be appreciated that the methods and systems discussed herein can be extended to SR MPLS.

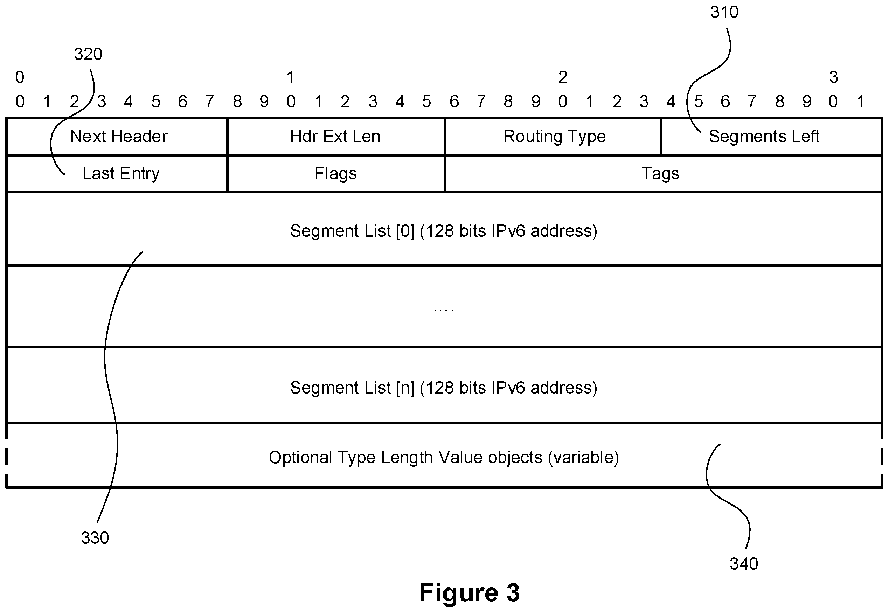

For SRv6, an IPv6 address is explicitly associated with a segment. An example IPv6 segment routing header (SRH) is illustrated in Figure 3. Such a header identifies the remaining segments **310** in the SR for the PDU session, and the index of the last segment [n] **320** as well as the IPv6 addresses for each segment **330** as fields Segment list [0] ... Segment list [n]. It is noted that each IPv6 address **330** represents the SID for that segment. In some embodiments, the field entitled "segments left" **310** is an 8-bit unsigned integer representing the number of route segments remaining, i.e., number of explicitly listed intermediate nodes still to be visited before reaching the final destination. The Last Entry **320** contains the index (zero based), in the Segment List, of the last element of the Segment List. Segment List[n] includes 128 bit IPv6 addresses representing the nth segment in the Segment List. The Segment List is encoded starting from the last segment of the SR Policy. In other words, the first element of the segment list (Segment List [0]) contains the last segment of the SR Policy, the second element contains the penultimate segment of the SR Policy and so on. It is noted that the IPv6 address in segment list [n] **330** is the SID. It is noted that as packets pass through each segment endpoint the SID gets copied into the destination address (DA) of IPv6 packet by the segment endpoint node. In some embodiments, the SRH is only looked at the segment end point where SR processing needs to take place. The rest of the network simply works with IP routing and forwarding. In some embodiments the SRH can be omitted in scenarios that only involve two segment endpoints. In such cases, the DA in IPv6 header is the SID

SR-MPLS, the MPLS variation of SR, uses the MPLS label stack. In SR-MPLS each label represents a SID. The SR-MPLS SID is a MPLS label or an index value into an MPLS label space explicitly associated with the segment.

The Distributed Mobility Management (DMM) working group of the Internet Task Force (IETF) has proposed replacing GTP with SR for next generation wireless networks, as set out in the following IETF drafts: draft-ietf-dmm-srv6-mobile-uplane; draft-bogineni-dmm-optimized-mobile-user-plane; and draft-homma-dmm-5gs-id-loc-coexistence.

Such approaches are suggested because SR is more feature rich than GTP, and thus can offer additional advantages. However one disadvantage of such an approach is the cost and complexity of replacing/upgrading not only all of the UPFs (e.g., converting them from those configured to GTP to UPFs configured for SR), but also any CPF that interacts with the new UPFs.

Accordingly, aspects of this disclosure provide a migration path which allow for SR to be used in the UP, without requiring changes to the 3GPP control plane. In other words, a 3GPP CPF can still be configured to control UPFs that are designed for use with GTP and those designed for use with SR. Some embodiments discussed herein describe methods and systems for allowing the UP to utilize SR while still being controlled by such 3GPP control planes.

Accordingly, embodiments associate SIDs with GTP endpoints' IP addresses and TEIDs. These IP addresses are currently communicated to UPFs by existing control plane functions. In some existing networks the CPF may also provide TEIDs to UPFs for the corresponding GTP tunnels. In embodiments of the present invention, CPFs are able to still provide IP address and TEIDs, but the UPFs themselves are modified to allow for replacement of GTP tunnels with an SR based user plane in mobile core. Accordingly, an SR based user plane is established between Mobile network data plane functions (MNDPF) and the base station (e.g., eNB for 4G networks and gNB for 5G networks). MNDPFs include the SGW and PGW for 4G networks, and the UPFs for 5G networks. According to an embodiment, each network node or function in the UP, (e.g, the UPFs as well as the gNB), retains the existing GTP processing module, and adds an SR module. In this specification, the term node is used to refer to a physical node, as well as a logical or virtual node, such as a UPF instantiated in a physical network element. Each GTP processing module receives GTP information from a control plane function. The GTP information is typically associated with the addresses, peer IDs and TEIDs of the GTP tunnels associated with a PDU session. As discussed above, this GTP information can come from the 3GPP CP or a GTP CP. Each UP node is configured to support SRv6 interoperability with GTP tunnels, by translating between the GTP processing module and the SR module. Where, in the prior art, a GTP module would receive data for transmission and then push it down the protocol stack to either UDP or IP processing, the GTP processing module in a MNDPF sends its data to the SR processing module. From the perspective of the GTP processing module, and the control plane functions that interact with it, nothing changes. However, instead of an actual GTP tunnel, an SR connection is used. This includes the tandem nodes, e.g., UPF-A. Accordingly in some embodiments, tandem nodes along the path transform data received with SRv6 headers to GTP format, and also transform data packets from a GTP format to SRv6. Because CPFs that are designed to interact with GTP-based UPFs can still operate without modification, a migration path is provided that does not require redesign of the CP. As new networks are developed, or as existing networks are substantively overhauled, it may be possible to do away with a CP that assumes GTP based UPFs, but until that point the migration path is beneficial. Accordingly the SR module at each tandem segment end point receives SRv6 packets, and converts them to GTP format. The GTP formatted packets are passed to the GTP processing module. For outgoing packets, the GTP processing module determines the TEID associated with the outgoing GTP tunnel and generates the outbound GTP packet. The GTP packet is then sent to the SR module, which converts the GTP packets to an SRv6 packet. This SRv6 packet is sent to the next UPF.

In this context an association is made between the GTP tunnels for the PDU sessions and the segments used for SR routing. Such an association is used by each tandem node such that the tandem node can receive an incoming SR packet from a first node associated with a first GTP tunnel terminating at the tandem node, and transmit an outgoing SR packet to the next node in the mobile core network along the user plane, the outgoing SR packet associated with a second GTP tunnel beginning with the tandem node. The outgoing SR packet is created by the tandem node based on GTP information previously received by the tandem node for the PDU session. This previously received GTP information is used to make the association between the GTP tunnels and Segments used for SR. This association is used by the tandem node to convert the incoming SR packet to a GTP packet that will be associated with the GTP tunnel that the UPF associates with the correct PDU session. When the tandem node is transmitting, a GTP packet is created that is associated with a TEID that is expected at the other end of the GTP tunnel. This GTP information is associated with a SID that is associated with a SR connection and which can be used to create the corresponding SR packet. As an example, the tandem node associates the GTP tunnel information for an incoming tunnel (e.g., source address (SA), destination address (DA), TEID), to an incoming SID. Similarly, the tandem node associates the GTP tunnel information for an outgoing tunnel (e.g., source address (SA), destination address (DA), TEID), to an outgoing SID. Such an association process can include the following. The UPF associates a SID to a set of functions that extract the SA, DA, TEID from the SID (in an incoming SR packet). These set of functions then forms the GTP packet. The UPF may also add the UDP header and then pass this packet to the GTP processing module to produce the outgoing GTP packet. A similar set of functions, based on a similar association is utilized to then convert the outgoing GTP packet to the SR packet. In some embodiments, the SID is created in a manner that allows the GTP information to be extracted from the SID without access to external resources. In such embodiments, information such as the TEID, the SA and DA may be encoded into the SID (either transparently or through the use of a reversible function). In other embodiments, the SID might not contain GTP information. In such a case, the SID may be a number that can be treated as an index to a table which stores the corresponding GTP information, or it may act as a pointer to a memory location in the UPF that stores the GTP information.

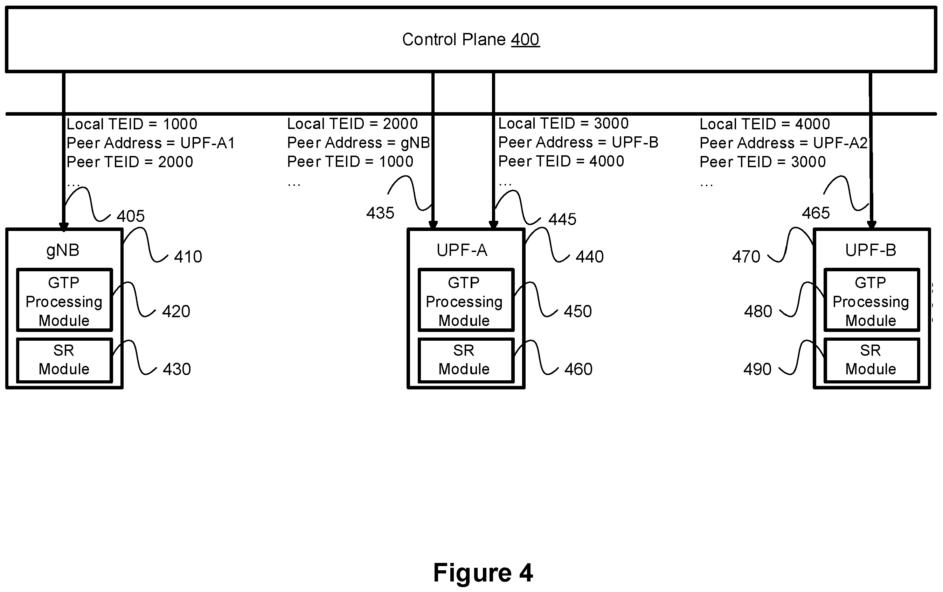

Details of this process are described below with reference to Figures 4-9, according to an embodiment.

Figure 4 illustrates an example of GTP information for GTP tunnels for a UP, according to an embodiment. This figure shows an example of GTP tunnel information for GTP tunnel establishment in the user/data plane, including GTP TEID and peer info for the nodes of the user plane for a particular PDU session. In Figure 4, the UP includes gNB **410**, a tandem UPF UPF-A **440**, and UPF-B **470**. Each node includes a GTP processing module and an SR module. Accordingly gNB **410** includes GTP processing module **420** and SR module **430**, UPF-A **440** includes GTP processing module **450** and SR module **460**, and UPF-B **470** includes GTP processing module **480** and SR module **490**. In the embodiment illustrated, a control plane function within control plane **400** sends configuration information including GTP information to the respective UPFs. It should be noted that different CPFs may be corresponding with each UPF. gNB **410** receives configuration information including GTP information **405** that defines the GTP tunnel for a particular session to UPF-A **440**. Similarly, UPF-A **440** receives configuration information including GTP information **435** and **445** that define the GTP tunnels for the session to gNB **405** and UPF-B **470** respectively. UPF-B **470** receives configuration information including GTP information **465** that defines the GTP tunnel with UPF-A **440** for the PDU session. It is noted that the Figures illustrate an abstraction of control plane **400** which may be implemented as either a consolidation of the 3GPP control plane and the GTP control plane, or as separate control planes made up of differing CPFs. In some embodiments, the GTP information may not include all the information shown. In some embodiments the control plane function might simply instruct the pairs of UPFs to connect via GTP tunnels. In such embodiments, a control plane function need not distribute the TEID to the UPFs. Rather the CPF can send IP address information of the adjacent node with which a GTP tunnel should be created to the endpoints of each GTP tunnel and instruct them to establish the GTP-based User Plane connections. The two tunnel endpoints then perform GTP tunnel establishment, during which the TEIDs are defined. For example, the CPF in the GTP CP used for GTP tunnel establishment can include end nodes **410**, **440**, and **470** sending the GTP tunnel information **405**, **435**, **445**, and **465** to the respective nodes. For example, 3GPP CP instructs the end points to establish GTP-UP and provides them with peer address. GTP-CP in the GTP processing module at each end point then communicates with its peer (to establish the TEIDs). Upon completion of GTP-CP communication, GTP-U tunnels are established between the two end points.

GTP information **405**, includes Local TEID = 1000, Peer Address = UPF-A1 (e.g., port 1 of the UPF A), Peer TEID = 2000, etc., for a GTP tunnel between the gNB **410** and UPF-A **440**. This information is stored in the GTP processing module **420**. GTP information **435**, includes Local TEID = 2000, Peer Address = gNB, Peer TEID = 1000, etc., for a GTP tunnel between UPF-A **440** and the gNB **410**. This information is stored in the GTP processing module **450**. GTP information **445**, includes Local TEID = 3000, Peer Address = UPF-B, Peer TEID = 4000, etc., for a GTP tunnel between UPF-A **440** and the UPF-B **470**. This information is also stored in the GTP processing module **450**. GTP information **465**, includes Local TEID = 4000, Peer Address = UPF-A2 (e.g., port 2 of the UPF A), Peer TEID = 3000, etc., for a GTP tunnel between UPF-B **470** and UPF-A **440**. This information is stored in the GTP processing module **480**. In the case where TEID is not distributed, the GTP processing module generates the TEID and communicates it with the far end of the GTP tunnel. The generated TEID, and other such information are then stored in the local GTP processing module.

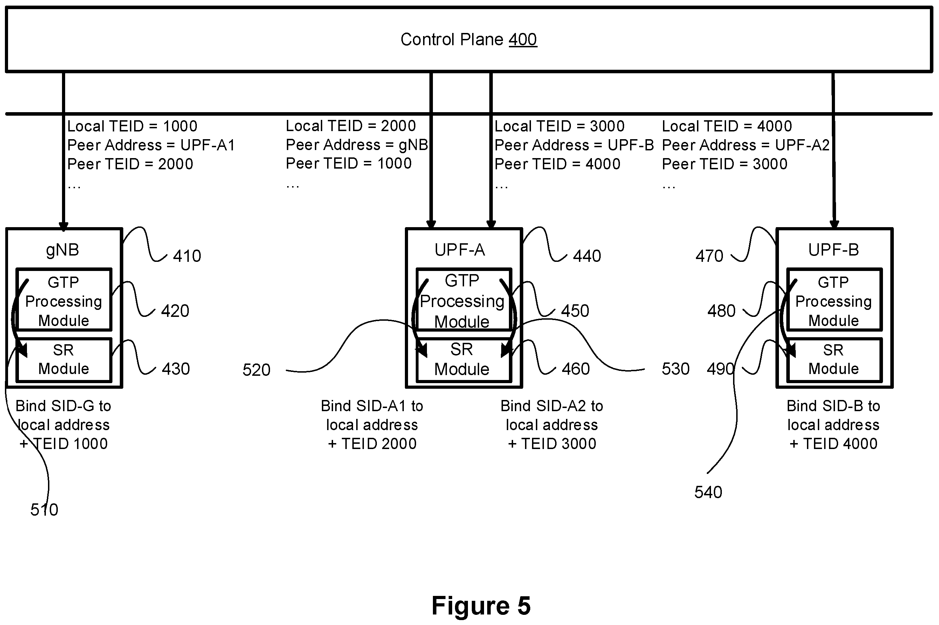

Figure 5 illustrates a process in which the network functions of the UP converts between GTP information received in Figure 4 and information required for SR, according to an embodiment. In some embodiments, the GTP processing module transmits data into a GTP tunnel by sending the GTP packets to the lower network layer. Where in the existing art, as shown in Figure 1, this is a UDP/IP layer, in embodiments of the present invention, this is an SR layer represented by the SR module. No GTP tunnels are created, but this is not seen by the GTP processing module. In other embodiments, the GTP processing modules need not attempt to establish GTP tunnels. Instead the GTP processing module passes TEID and other information to the SR module. Accordingly, in Figure 5, the GTP processing module for each network function passes the GTP CP signaling information discussed above with reference to Figure 4 to the corresponding SR module, which associates the local addresses and TEIDs to local SIDs. In the embodiment illustrated, the GTP processing module passes the information to the SR module which creates an association, which may also be referred to as a binding, between the SID and the GTP configuration information. However it should be appreciated that in alternative embodiments, the association may be created by another module of the network function. Accordingly, as illustrated at step **510** the SR module **430** of gNB **410** receives the CP information from GTP processing module **420** and associates the SID-G (i.e. the SID of gNB **410** for incoming SR packets) and SID-A1 (the SID of UPF-A for outgoing packets sent from the gNB **410** to the UPF-A **440**) to a set of functions of the SR module which can be used to convert between the SID and the corresponding GTP tunnel. This can include, in one example, an association between the SID-A1 (which the SR module uses when transmitting an SR packet from the gNB to the UPF-A) and GTP tunnel (e.g. the local addresses (SA of gNB **410**, DA of port 1 of UPF-A) and TEID 2000).

At step **520** the SR module **460** of UPF-A **440** receives the CP information from GTP processing module **450** and associates the SID-A1 (i.e, the SID of port 1 of UPF-A) to a set of functions of the SR module which can be used to convert between the SID and the corresponding GTP tunnel (extending from gNB **410** to UPF-A **440**). For example, the association allows the set of functions of the SR module **460** to convert an incoming SID-A1 to the GTP information of the tunnel from gNB to UPF-A (e.g. the local addresses (SA of gNB **410**, DA of port 1 of UPF-A) and TEID 2000). Similarly, at step **530** the SR module **460** of UPF-A **440** receives the CP information from GTP processing module **450** and associates the SID-A2 (i.e, the SID of port 2 of UPF-A) to the local addresses (SA of port 2 of UPF-A, DA of UPF-B) and TEID 3000. Similarly, at step **540** the SR module **490** of UPF-B **470** receives the CP information from GTP processing module **480** and binds the SID-B (i.e. the SID of UPF-B) to the local addresses (of UPF-B) and TEID 4000.

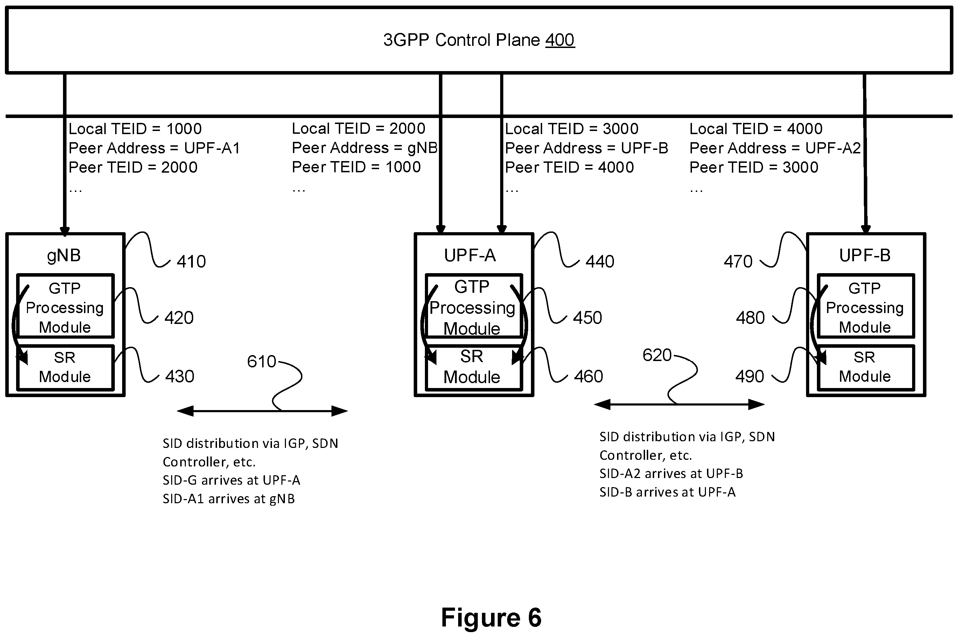

Figure 6 illustrates SID distribution, according to an embodiment. Step **610** illustrates SID distribution between the SR module **430** of gNB **410** and the SR module **460** of UPF A **440** via a method for distributing routing information, such as interior gateway protocol (IGP), via an SDN controller, etc. Accordingly, SID-G arrives at UPF-A and SID-A1 arrives at gNB. Step **620** illustrates SID distribution between the SR module **490** of UPF-B **470** and the SR module **460** of UPF A **440** via a method for distributing routing information, such as IGP, via an SDN controller, etc. Accordingly SID-A2 arrives at UPF-B and SID-B arrives at UPF-A. In one embodiment, as part of step **610**, tandem node **440** instructs gNB **410** to send SR packets with SID-A1, as the SR module **460** is configured to replace SID-A1 locally stored GTP information (e.g., with the local addresses (SA of gNB **410**, DA of port 1 of UPF-A) and TEID 2000) to form the corresponding incoming GTP packet. In another embodiment, as part of step **610**, tandem node encodes GTP information (SA of gNB **410**, DA of port 1 of UPF-A and TEID 2000) into SID-A1 and instructs the gNB **410** to send SR packet with SID-A1. In this case there is no need for the tandem node to use local storage. For example, it is noted that the combination of DA + SA + TEID in the lower 64 bits of the SID associates that SID to a specific user flow.

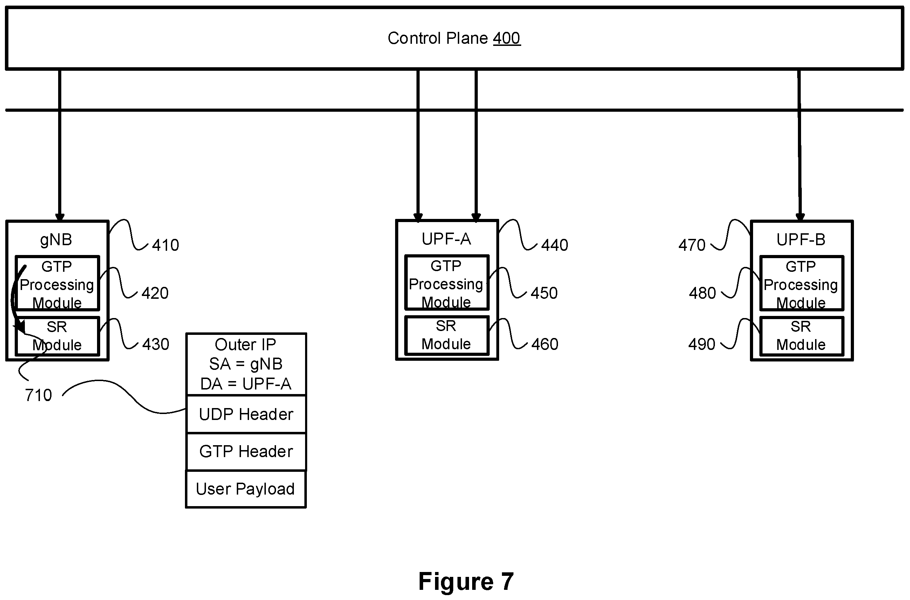

Figure 7 illustrates an example of packet processing for packets to be sent from gNB to UPF-A, according to an embodiment. Step **710** shows the GTP processing module **420** sending a packet to the SR module **430**. Similar to existing GTP processing, GTP processing module **420** inserts GTP header to user data packets going from gNB to UPF-A (as if GTP processing module was sending the packet to UPF-A **440**) and passes the data packets to SR module for further processing. Alternatively, the GTP processing module can simply pass GTP related information along with the user payload to the SR module. In this case, the SR module constructs the SID by encoding SA+DA+TEID into the SID. It is noted that this encoding scheme applies to SRv6. In other embodiments utilizing SR MPLS, it should be appreciated that SR-MPLS uses associations.

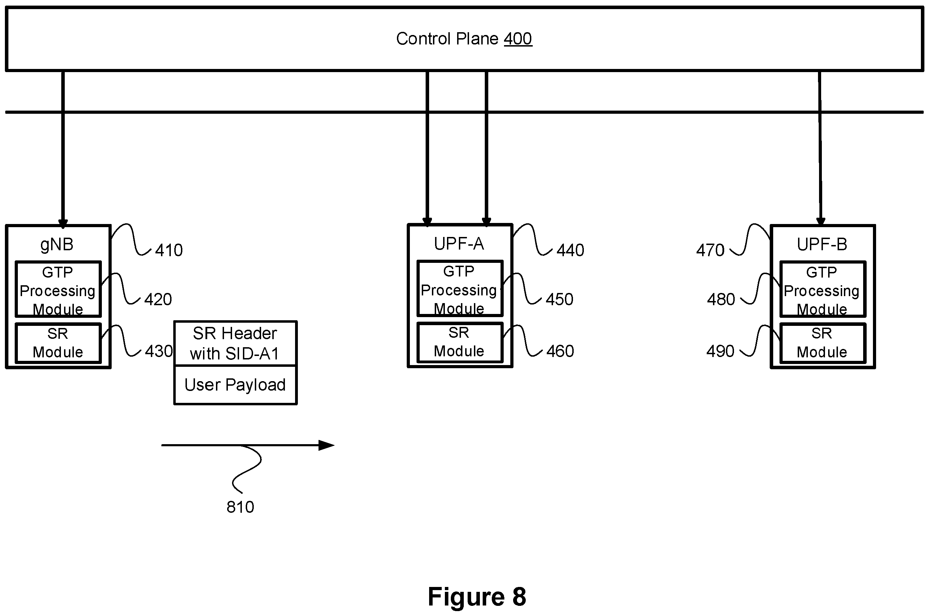

Figure 8 illustrates an example of further packet processing for packets to be sent from gNB to UPF-A, according to an embodiment. The SR module **430** removes GTP related headers and inserts SR header and SID-A1 into the packet and sends the packet to the network toward UPF-A **440** as illustrated at step **810**.

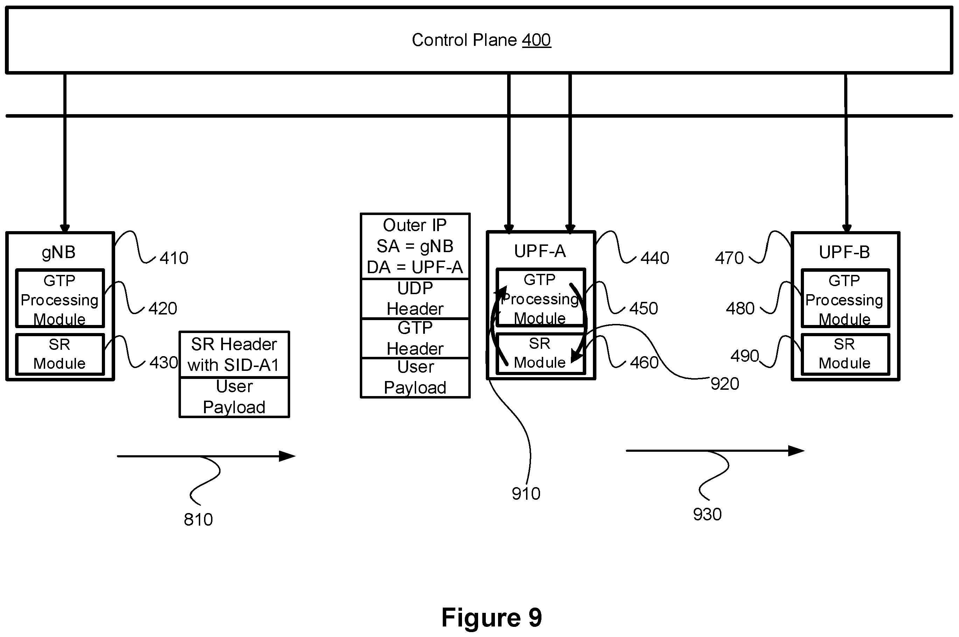

Figure 9 illustrates an example of packet processing for packets received from gNB **410** to UPF-A **440**, according to an embodiment. The SR module **460** of UPF-A **440** receives the SR packet sent as **810**, and recognizes SID-A1 as the SID corresponding to the GTP tunnel extending from gNB **410** to itself. Accordingly, SR module **460** applies a local conversion function which converts the arriving packet into its GTP format. This local conversion function implements the set of functions of the association described above with respect to Figure 5 above. It is noted that in some embodiments, this includes replacing the SR header with UDP, GTP, and outer IP header to return the packet to its GTP format. The GTP packet is then passed to GTP processing module **450** for further processing, as shown at **910**. It is noted that packet sent at **910** corresponds to the packet sent at **710**. The GTP processing module **450** then determines the next TEID for the packets for the next GTP tunnel based on the previously received GTP information **445**. The UPF-A **440** converts **920** the GTP packets to SR packets for transmission **930** to the next UPF (which in this example is UPF-B **470**). This conversion can occur in the GTP processing module **450**, the SR module **460**, or some other module of the UPF-A **440**.

It should be noted that while a single SR module **460** is illustrated for UPF-A **440**, it should be appreciated that there can be more SR modules, for example one for incoming packets and one for handling outgoing packets, or one for each port. This can also apply for the GTP processing module **450**. It should also be understood that in some embodiments there may be SR and GTP processing modules that support all session at a function, while in other embodiments each session (or groupings of sessions) may be supported by their own processing modules.

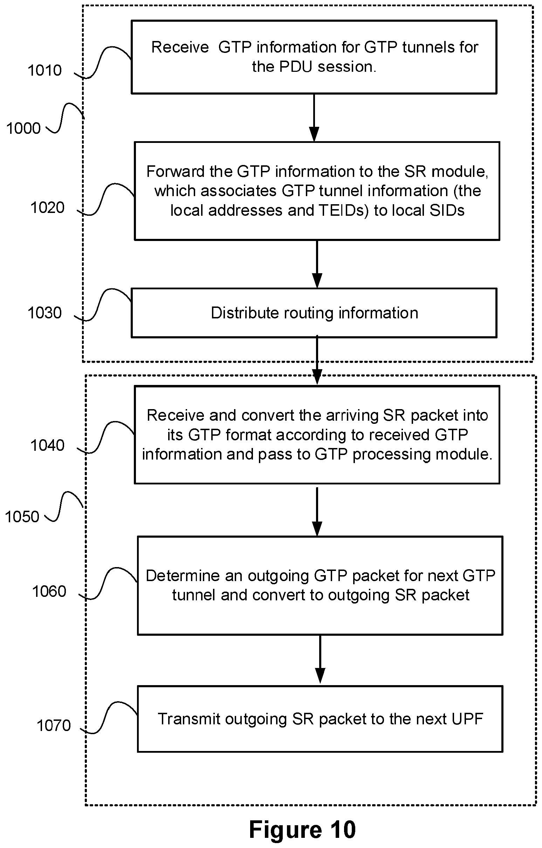

Figure 10 illustrates a method executed by a tandem node, such as UPF-A **440**, according to an embodiment. Such a method includes two sets of procedures for a PDU session, namely a session establishment procedure 1000, and a packet processing procedure **1050**. Session establishment procedure 1000 includes receiving GTP information for GTP tunnels for the PDU session 1010. In some embodiments, step 1010 is performed by GTP processing module **450**. GTP processing module **450** forwards 1020 the GTP information to the SR module **460**, which performs an association between the GTP tunnels and segments (for example associating the local addresses and TEIDs to local SIDs for the session). The SR module distributes the routing information 1030 using a method for distributing routing information, such as IGP, via an SDN controller, etc.

Once the user plane for the session is established 1000, the packet processing procedure 1050 begins with the SR module **460** receiving and converting 1040 the arriving SR packet into its GTP format according to received GTP information. In other words, the SR packet received, for example over the N3 interface as shown at **810** in Figure 9, is converted to the GTP packet. It is noted that an N3 interface is used for 5G, whereas S1-U is used for 4G/LTE. This conversion is based on association made at step 1020 based on the GTP information (e.g., SA, DA, TEID, etc. shown at **435, 445** in Figure 4). The SR module **460** then forwards the GTP packet to GTP processing module **450** as shown at **910**. The GTP processing module **450** determines an outgoing GTP packet for the next GTP tunnel and converts the packet to an outgoing SR packet 1060. The SR module **460** then transmits the outgoing SR packet to the next UPF (e.g., UPF-B **470**) via the N9 interface. It should be appreciated that this process can occur for SR packets received over the N3 interface, for UPFs which receive UL SR packets from a gNB. Such a process can also be performed by an UPF which receives an SR packet over the N9 interface, for example for a tandem UPF in a UP path which includes multiple UPFs. In such an example, the UPF converts incoming SR packets over an N9 interface to GTP, determines the next tunnel, determines an outgoing GTP packet for the next tunnel, and then converts the outgoing GTP packet to an outgoing SR packet for transmission over an N9 interface to the next UPF. Further, for DL packets, the UPF can convert SR packets received over an N9 interface to GTP, determine the outgoing GTP packet, and converts the outgoing GTP packet into an SR outgoing packet, and transmitting the outgoing SR packet to the next node. For DL packets, the outgoing SR packet can be transmitted over an N9 interface, if the next node is another Tandem UPF, or over the N3 interface, if the next node is a gNB or other access node. In other embodiments, it is noted that S5/S8 is used in 4G/LTE, but no multiple UP nodes are used in this case.

More generally an aspect of the disclosure provides method of segment routing in a mobile core network with a control plane which controls nodes configured to use a GTP user plane, the method performed by a tandem node for a packet data unit (PDU) session . Such a method includes receiving from a first node, an incoming SR packet, having a SID associated with a first GTP tunnel terminating at the tandem node; and transmitting an outgoing SR packet to a next node in the mobile core network along the user plane, the outgoing SR packet having a SID associated with a second GTP tunnel beginning with the tandem node. In some embodiments, the outgoing SR packet is created by the tandem node based on GTP information previously received by the tandem node for the PDU session. In some embodiments, the method includes converting the incoming SR packet to an incoming GTP packet; determining an outgoing GTP packet based on the GTP information; and converting the outgoing GTP packet to the outgoing SR packet. In some embodiments, converting the outgoing GTP packet to the outgoing SR packet comprises removing GTP related headers and inserting an SR header. In some embodiments, inserting the SR header includes inserting a segment ID (SID) for the next UPF. In some embodiments, the GTP information previously received by the tandem node is received from a function in the control plane. In some embodiments, the GTP information previously received by the tandem node is received from other mobile network nodes for the PDU session established to use a GTP based user plane. In some embodiments, transmitting the outgoing SR packet includes transmitting the outgoing packet over an N9 interface. In some embodiments, receiving the incoming SR packet includes receiving the SR packet on one of an N3 and an N9 interface.

Another aspect of the disclosure provides a tandem node for carrying out the methods discussed herein.

Another aspect of the disclosure provides an apparatus for segment routing in a mobile core network with a control plane which controls nodes configured to use a GTP user plane. Such an apparatus includes at least one Segment Routing (SR) module, and at least one GTP processing module. Such an apparatus is configured to receive an incoming SR packet from a first node associated with a first GTP tunnel; and transmit an outgoing SR packet to a second node associated with a second GTP tunnel.

In some embodiments, such an SR configured user plane can be used for network slices, such as slices for machine type communication (MTC). For example, SR data plane can be applied to a specific slice in 5G networks (e.g. a slice which supports MTC). In other words, there can be 5G slices that will keep using GTP data plane, while there are other slices that will use an SR user plane. Accordingly the methods and systems discussed herein can be used to accommodate networks which use both GTP and SR user planes controlled by a common Control Plane.

Accordingly the SR module at each segment end point intercepts SR packets, which are converted to GTP format and passed to the GTP processing module at that end point to prevent any changes to 3GPP control plane.

It is noted that Segment end points include the gNB and the UPFs in 5G terminology. In 4G, Segment end points include eNB, SGW, and PGW. It is noted that there can be other segment end points within the path that belong to the transport layer which are not involved with GTP conversion (e.g., used for traffic steering).

An aspect of the disclosure provides a method for providing an SR user plane in mobile core networks without requiring changes to the 3GPP control plane. Such a method includes receiving, by a tandem node in a mobile core network for a PDU session established to use a GTP based user plane, an incoming SR packet from a first node. Such a method further includes transmitting an outgoing SR packet from the tandem node to the next node in the mobile core network along the user plane. In some embodiments, the method further includes converting, by the tandem node, the incoming SR packets to GTP packets; and performing, by the tandem node, GTP processing to determining an outgoing GTP packet. Such embodiments further include converting, by the tandem node, the outgoing GTP packet to the outgoing SR packet. In some embodiments, converting, by the tandem node, the outgoing GTP packet to the outgoing SR packet. In some embodiments, converting, by the tandem node, the outgoing GTP packet to the outgoing SR packet includes removing GTP related headers and inserting SR header and sending the SR packet to the physical/virtual node in the mobile core network along the user plane. In some embodiments, inserting SR header includes inserting the SID of the next UPF. In some embodiments, the method further includes receiving, by the tandem node, GTP tunnel information from a function in the control plane. In some embodiments, the method further includes receiving, by the tandem node, GTP tunnel information from other mobile network nodes for the PDU session established to use a GTP based user plane.

Due to the desire to use existing control plane functions within a core network, there is interest in the re-use of existing functions that utilize GTP. Embodiments discussed above allow for an SR user plane without requiring changes to the 3GPP control plane. Advantageously, embodiments described herein can allow for migrating the wireless core network from GTP based UP to an SR based UP while using the existing 3GPP control plane, yet enabling the standards to modify the control plane in the future.

Those skilled in the art will appreciate that embodiments of the present invention are directed to a UPF for use in a wireless core network. This UPF is designed to allow interaction with CPFs that assume that the UPF will communicate over an N9 interface to another UPF using GTP tunnels. In place of GTP tunnels, an SR path is used. To allow this, the GTP tunnel configuration information is mapped to a SID by the UPF. In some embodiments, as discussed above, this is done through logical GTP and SR processing modules. In other embodiments, a unified module that immediately generates a SID associated with the GTP tunnel information can be employed. The GTP configuration and control processes can still function as they otherwise would, but no functions in the UP or CP of the network need to be adjusted other than the two UPFs communicating with each other over the N9 interface. In some embodiments, a UPF may be configured to carry out the same conversion between SR and GTP for sessions received over the N3 interface.

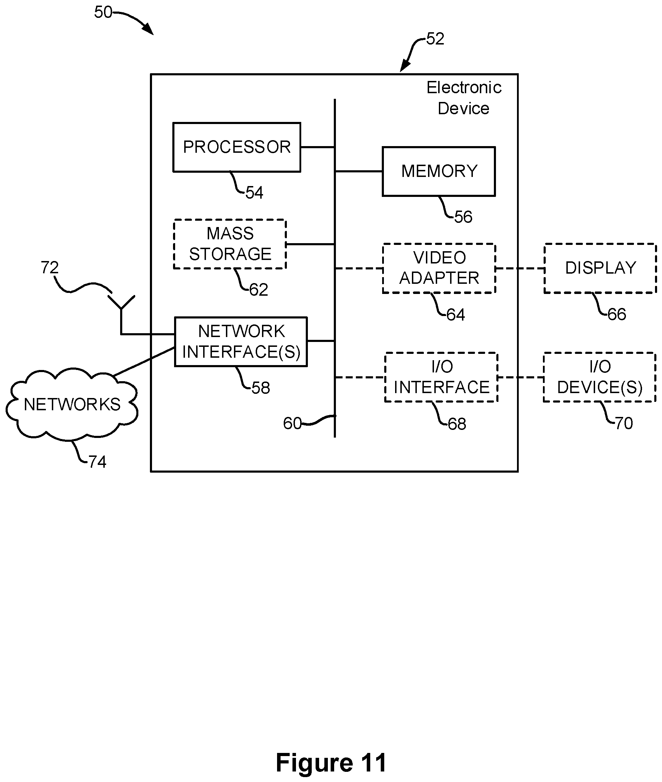

Figure 11 is a block diagram of an electronic device (ED) 52 illustrated within a computing and communications environment 50 that may be used for implementing the devices and methods disclosed herein. In some embodiments, the electronic device may be an element of communications network infrastructure, such as a base station (for example a NodeB, an evolved Node B (eNodeB, or eNB), a next generation NodeB (sometimes referred to as a gNodeB or gNB), a home subscriber server (HSS), a gateway (GW) such as a packet gateway (PGW) or a serving gateway (SGW) or various other nodes or functions within a core network (CN) or a Public Land Mobility Network (PLMN). In other embodiments, the electronic device may be a device that connects to the network infrastructure over a radio interface, such as a mobile phone, smart phone or other such device that may be classified as a User Equipment (UE). In some embodiments, ED 52 may be a Machine Type Communications (MTC) device (also referred to as a machine-to-machine (m2m) device), or another such device that may be categorized as a UE despite not providing a direct service to a user. In some references, an ED may also be referred to as a mobile device, a term intended to reflect devices that connect to mobile network, regardless of whether the device itself is designed for, or capable of, mobility. Specific devices may utilize all of the components shown or only a subset of the components, and levels of integration may vary from device to device. Furthermore, a device may contain multiple instances of a component, such as multiple processors, memories, transmitters, receivers, etc. The electronic device 52 typically includes a processor 54, such as a Central Processing Unit (CPU), and may further include specialized processors such as a Graphics Processing Unit (GPU) or other such processor, a memory 56, a network interface 58 and a bus 60 to connect the components of ED 52. ED 52 may optionally also include components such as a mass storage device 62, a video adapter 64, and an I/O interface 68 (shown in dashed lines).

The memory 56 may comprise any type of non-transitory system memory, readable by the processor 54, such as static random access memory (SRAM), dynamic random access memory (DRAM), synchronous DRAM (SDRAM), read-only memory (ROM), or a combination thereof. In an embodiment, the memory 56 may include more than one type of memory, such as ROM for use at boot-up, and DRAM for program and data storage for use while executing programs. The bus 60 may be one or more of any type of several bus architectures including a memory bus or memory controller, a peripheral bus, or a video bus.

The electronic device 52 may also include one or more network interfaces 58, which may include at least one of a wired network interface and a wireless network interface. As illustrated in Figure 11, network interface 58 may include a wired network interface to connect to a network 74, and also may include a radio access network interface 72 for connecting to other devices over a radio link. When ED 52 is a network infrastructure element, the radio access network interface 72 may be omitted for nodes or functions acting as elements of the PLMN other than those at the radio edge (e.g. an eNB). When ED 52 is infrastructure at the radio edge of a network, both wired and wireless network interfaces may be included. When ED 52 is a wirelessly connected device, such as a User Equipment, radio access network interface 72 may be present and it may be supplemented by other wireless interfaces such as WiFi network interfaces. The network interfaces 58 allow the electronic device 52 to communicate with remote entities such as those connected to network 74.

The mass storage 62 may comprise any type of non-transitory storage device configured to store data, programs, and other information and to make the data, programs, and other information accessible via the bus 60. The mass storage 62 may comprise, for example, one or more of a solid state drive, hard disk drive, a magnetic disk drive, or an optical disk drive. In some embodiments, mass storage 62 may be remote to the electronic device 52 and accessible through use of a network interface such as interface 58. In the illustrated embodiment, mass storage 62 is distinct from memory 56 where it is included, and may generally perform storage tasks compatible with higher latency, but may generally provide lesser or no volatility. In some embodiments, mass storage 62 may be integrated with a heterogeneous memory 56.

The optional video adapter 64 and the I/O interface 68 (shown in dashed lines) provide interfaces to couple the electronic device 52 to external input and output devices. Examples of input and output devices include a display 66 coupled to the video adapter 64 and an I/O device 70 such as a touch-screen coupled to the I/O interface 68. Other devices may be coupled to the electronic device 52, and additional or fewer interfaces may be utilized. For example, a serial interface such as Universal Serial Bus (USB) (not shown) may be used to provide an interface for an external device. Those skilled in the art will appreciate that in embodiments in which ED 52 is part of a data center, I/O interface 68 and Video Adapter 64 may be virtualized and provided through network interface 58.

In some embodiments, electronic device 52 may be a standalone device, while in other embodiments electronic device 52 may be resident within a data center. A data center, as will be understood in the art, is a collection of computing resources (typically in the form of servers) that can be used as a collective computing and storage resource. Within a data center, a plurality of servers can be connected together to provide a computing resource pool upon which virtualized entities can be instantiated. Data centers can be interconnected with each other to form networks consisting of pools computing and storage resources connected to each by connectivity resources. The connectivity resources may take the form of physical connections such as Ethernet or optical communications links, and in some instances may include wireless communication channels as well. If two different data centers are connected by a plurality of different communication channels, the links can be combined together using any of a number of techniques including the formation of link aggregation groups (LAGs). It should be understood that any or all of the computing, storage and connectivity resources (along with other resources within the network) can be divided between different sub-networks, in some cases in the form of a resource slice. If the resources across a number of connected data centers or other collection of nodes are sliced, different network slices can be created. In some embodiments, electronic device 52 may implement a User Plane (UP) Function (UPF), a (Radio) Access Network node (R)AN, such as a gNB, or a control plane function such as a Session Management Function (SMF) or a Software Defined Networking (SDN) controller. In some embodiments a tandem node can include a plurality of electronic devices or subsets thereof, for example the GTP processing module and SR module can be an electronic device (e.g., a card) within a tandem node.

Through the descriptions of the preceding embodiments, the present disclosure may be implemented by using hardware only or by using software and a necessary universal hardware platform. Based on such understandings, the technical solution of the present disclosure may be embodied in the form of a software product. The software product may be stored in a non-volatile or non-transitory storage medium, which can include the device memory as described above, or stored in removable memory such as compact disk read-only memory (CD-ROM), flash memory, or a removable hard disk. The software product includes a number of instructions that enable a computer device (computer, server, or network device) to execute the methods provided in the embodiments of the present disclosure. For example, such an execution may correspond to a simulation of the logical operations as described herein. The software product may additionally or alternatively include number of instructions that enable a computer device to execute operations for configuring or programming a digital logic apparatus in accordance with embodiments of the present disclosure.

## Claims

1. A method of segment routing, SR, in a mobile core network with a control plane which controls nodes configured to use a General Packet Radio Service, GPRS, Tunnel Protocol, GTP, user plane, the method performed by a tandem node for a packet data unit, PDU, session, the method comprising:
receiving (1040) from a first node, an incoming SR packet, having a segment identifier, SID, associated with a first GTP tunnel terminating at the tandem node; and
outputting (1070) an outgoing SR packet to a next node in the mobile core network along the user plane, the outgoing SR packet having a SID associated with a second GTP tunnel beginning with the tandem node.

2. The method of claim 1 wherein the outgoing SR packet is created by the tandem node based on GTP information previously received by the tandem node for the PDU session.

3. The method of claim 2 further comprising:
converting the incoming SR packet to an incoming GTP packet;
determining an outgoing GTP packet based on the GTP information; and
converting the outgoing GTP packet to the outgoing SR packet.

4. The method of claim 3 wherein converting the outgoing GTP packet to the outgoing SR packet comprises removing GTP related headers and inserting an SR header.

5. The method of claim 4 wherein inserting the SR header includes inserting a segment ID, SID, for the next node.

6. The method of any one of claims 2 to 5 wherein the GTP information previously received by the tandem node is received from a function in the control plane.

7. The method of any one of claims 2 to 6 wherein the GTP information previously received by the tandem node is received from other mobile network nodes for the PDU session established to use a GTP based user plane.

8. The method of claim 7, wherein the other mobile network nodes are end points for the PDU session.

9. The method of any one of claims 3 to 5, wherein the converting the incoming SR packet to an incoming GTP packet comprises replacing the SID of the incoming SR packet with stored GTP information relating to the first GTP tunnel.

10. The method of any one of claims 1 to 9 wherein outputting the outgoing SR packet includes outputting the outgoing packet over an N9 interface.

11. The method of claim 10 wherein receiving the incoming SR packet includes receiving the SR packet on one of an N3 and an N9 interface.

12. The method of any one of claims 1 to 11 wherein the next node is a virtualized function.

13. An electronic device (52), comprising a processor (54) and a memory (56), wherein the memory is configured to store instructions, wherein when executed by the processor, the instructions cause the electronic device to perform the method according to any one of claims 1-12.

14. A software product, comprising instructions, wherein when executed by a computer device, the instructions cause the electronic device to perform the method according to any one of claims 1-12.

15. A non-transitory storage medium, configured to store instructions, wherein when executed by a computer device, the instructions cause the electronic device to perform the method according to any one of claims 1-12.

## Patentansprüche

1. Verfahren für ein Segment-Routing, SR, in einem mobilen Kernnetzwerk mit einer Steuerungsebene, die Knoten steuert, die konfiguriert sind, um eine General-Packet-Radio-Service(GPRS)-Tunnelprotokoll(GTP)-Benutzerebene zu verwenden, wobei das Verfahren durch einen Tandemknoten für eine Paketdateneinheitssitzung, PDU-Sitzung, ausgeführt wird, wobei das Verfahren umfasst:
Empfangen (1040), von einem ersten Knoten, eines eingehenden SR-Pakets, das eine Segmentkennung, SID, aufweist, die mit einem ersten GTP-Tunnel verknüpft ist, der an dem Tandemknoten endet; und
Ausgeben (1070) eines ausgehenden SR-Pakets an einen nächsten Knoten in dem mobilen Kernnetzwerk entlang der Benutzerebene, wobei das ausgehende SR-Paket eine SID aufweist, die mit einem zweiten GTP-Tunnel verknüpft ist, der mit dem Tandemknoten beginnt.

2. Verfahren nach Anspruch 1, wobei das ausgehende SR-Paket durch den Tandemknoten, basierend auf GTP-Informationen, die zuvor durch den Tandemknoten für die PDU-Sitzung empfangen werden, erzeugt wird.

3. Verfahren nach Anspruch 2, das ferner umfasst:
Konvertieren des eingehenden SR-Pakets in ein eingehendes GTP-Paket;
Bestimmen eines ausgehenden GTP-Pakets basierend auf den GTP-Informationen; und
Konvertieren des ausgehenden GTP-Pakets in ein ausgehendes SR-Paket.

4. Verfahren nach Anspruch 3, wobei ein Konvertieren des ausgehenden GTP-Pakets in das ausgehende SR-Paket ein Entfernen von GTP-bezogenen Headern und ein Einfügen eines SR-Headers umfasst.

5. Verfahren nach Anspruch 4, wobei ein Einfügen des SR-Headers ein Einfügen einer Segment-ID, SID, für den nächsten Knoten einschließt.

6. Verfahren nach einem der Ansprüche 2 bis 5, wobei die zuvor durch den Tandemknoten empfangenen GTP-Informationen von einer Funktion in der Steuerungsebene empfangen werden.

7. Verfahren nach einem der Ansprüche 2 bis 6, wobei die zuvor durch den Tandemknoten empfangenen GTP-Informationen von anderen Mobilfunknetzwerkknoten für die PDU-Sitzung empfangen werden, die eingerichtet ist, um eine GTP-basierte Benutzerebene zu verwenden.

8. Verfahren nach Anspruch 7, wobei die anderen Mobilfunknetzwerkknoten Endpunkte für die PDU-Sitzung sind.

9. Verfahren nach einem der Ansprüche 3 bis 5, wobei das Konvertieren des eingehenden SR-Pakets in ein eingehendes GTP-Paket ein Ersetzen der SID des eingehenden SR-Pakets durch gespeicherte GTP-Informationen in Bezug auf den ersten GTP-Tunnel umfasst.

10. Verfahren nach einem der Ansprüche 1 bis 9, wobei ein Ausgeben des ausgehenden SR-Pakets ein Ausgeben des ausgehenden Pakets über eine N9-Schnittstelle einschließt.

11. Verfahren nach Anspruch 10, wobei ein Empfangen des eingehenden SR-Pakets ein Empfangen des SR-Pakets auf einer N3- und einer N9-Schnittstelle einschließt.

12. Verfahren nach einem der Ansprüche 1 bis 11, wobei der nächste Knoten eine virtualisierte Funktion ist.

13. Elektronische Vorrichtung (52), die einen Prozessor (54) und einen Speicher (56) umfasst, wobei der Speicher konfiguriert ist, um Anweisungen zu speichern, wobei die Anweisungen, wenn sie durch den Prozessor ausgeführt werden, die elektronische Vorrichtung veranlassen, das Verfahren nach einem der Ansprüche 1 bis 12 durchzuführen.

14. Softwareprodukt, das Anweisungen umfasst, wobei die Anweisungen, wenn sie durch eine Computervorrichtung ausgeführt werden, die elektronische Vorrichtung veranlassen, das Verfahren nach einem der Ansprüche 1 bis 12 durchzuführen.

15. Nichtflüchtiges Speichermedium, das konfiguriert ist, um Anweisungen zu speichern, wobei die Anweisungen, wenn sie durch eine Computervorrichtung ausgeführt werden, die elektronische Vorrichtung veranlassen, das Verfahren nach einem der Ansprüche 1 bis 12 durchzuführen.

## Revendications

1. Procédé de routage de segment, SR, dans un réseau central mobile avec un plan de commande qui commande des noeuds configurés pour utiliser un plan utilisateur de protocole de tunnel, GTP, de service général de paquets radio, GPRS, le procédé étant réalisé par un noeud en tandem pour une session d'unité de données par paquets, PDU, le procédé comprenant :
la réception (1040) en provenance d'un premier noeud, d'un paquet SR entrant, ayant un identifiant de segment, SID, associé à un premier tunnel GTP se terminant au niveau du noeud en tandem ; et
la sortie (1070) d'un paquet SR sortant à un noeud suivant dans le réseau central mobile le long du plan utilisateur, le paquet SR sortant ayant un SID associé à un second tunnel GTP commençant par le noeud en tandem.

2. Procédé selon la revendication 1, dans lequel le paquet SR sortant est créé par le noeud en tandem sur la base des informations GTP précédemment reçues par le noeud en tandem pour la session PDU.

3. Procédé selon la revendication 2, comprenant en outre :
la conversion du paquet SR entrant en un paquet GTP entrant ;
la détermination d'un paquet GTP sortant sur la base des informations GTP ; et
la conversion du paquet GTP sortant en paquet SR sortant.

4. Procédé selon la revendication 3, dans lequel la conversion du paquet GTP sortant en paquet SR sortant comprend la suppression des en-têtes liés au GTP et l'insertion d'un en-tête SR.

5. Procédé selon la revendication 4, dans lequel l'insertion de l'en-tête SR comporte l'insertion d'un ID de segment, SID, pour le noeud suivant.

6. Procédé selon l'une quelconque des revendications 2 à 5, dans lequel les informations GTP précédemment reçues par le noeud en tandem sont reçues d'une fonction dans le plan de commande.

7. Procédé selon l'une quelconque des revendications 2 à 6, dans lequel les informations GTP précédemment reçues par le noeud en tandem sont reçues d'autres noeuds de réseau mobile pour la session PDU établie pour utiliser un plan utilisateur basé sur le GTP.

8. Procédé selon la revendication 7, dans lequel les autres noeuds de réseau mobile sont des points d'extrémité pour la session PDU.

9. Procédé selon l'une quelconque des revendications 3 à 5, dans lequel la conversion du paquet SR entrant en un paquet GTP entrant comprend le remplacement du SID du paquet SR entrant par des informations GTP stockées concernant le premier tunnel GTP.

10. Procédé selon l'une quelconque des revendications 1 à 9, dans lequel la sortie du paquet SR sortant comporte la sortie du paquet sortant sur une interface N9.

11. Procédé selon la revendication 10, dans lequel la réception du paquet SR entrant comporte la réception du paquet SR sur une interface N3 ou une interface N9.

12. Procédé selon l'une quelconque des revendications 1 à 11, dans lequel le noeud suivant est une fonction virtualisée.

13. Dispositif électronique (52), comprenant un processeur (54) et une mémoire (56), la mémoire étant configurée pour stocker des instructions qui, lorsqu'elles sont exécutées par le processeur, amènent le dispositif électronique à réaliser le procédé selon l'une quelconque des revendications 1 à 12.

14. Produit logiciel, comprenant des instructions qui, lorsqu'elles sont exécutées par un dispositif informatique, amènent le dispositif électronique à réaliser le procédé selon l'une quelconque des revendications 1 à 12.

15. Support de stockage non transitoire, configuré pour stocker des instructions qui, lorsqu'elles sont exécutées par un dispositif informatique, amènent le dispositif électronique à réaliser le procédé selon l'une quelconque des revendications 1 à 12.
